# EUROPÄISCHE PATENTSCHRIFT

(11) **EP 0 615 933 B1**
(45) Veröffentlichungstag und Bekanntmachung des Hinweises auf die Patenterteilung: **05.06.1996**
(21) Anmeldenummer: 94102867.2
(22) Anmeldetag: 25.02.1994
(51) Int. Cl.: B65G 47/86

(54) **Vorrichtung zur taktweisen Bearbeitung von Gegenständen, insbes. von Spritzenzylindern für medizinische Spritzen**
Device for intermittent processing of articles, especially cylinders of medical syringes
Dipositif pour traitement intermittent d'articles, notamment de cylindres pour seringues médicales

(30) Priorität: 12.03.1993 DE 4307906
(43) Veröffentlichungstag der Anmeldung: 21.09.1994
(73) Patentinhaber: Arzneimittel GmbH Apotheker Vetter & Co. Ravensburg, D-88212 Ravensburg (DE)
(72) Erfinder: Vetter, Helmut, D-88212 Ravensburg (DE); Rupppenthal, Gerhard, D-88267 Vogt (DE); Steinbach, Klaus, D-88255 Baienfurt (DE)
(74) Vertreter: Dziewior, Joachim, Dipl.-Phys. Dr.

(56) Entgegenhaltungen:
- DE-A- 2 808 040
- DE-U- 8 815 126
- US-A- 3 570 647
- US-A- 3 623 210
- US-A- 3 837 472

## Beschreibung

Die Erfindung betrifft eine Vorrichtung zur taktweisen Bearbeitung von Gegenständen, insbes. von Spritzenzylindern für medizinische Spritzen, mit einem Transportrotor, der umfangsseitig mit die Gegenstände haltenden, in radialer Richtung nach außen hin offenen Aufnahmeelementen versehen ist, wobei jeweils mehrere der Aufnahmeelemente gemeinsam an einem Aufnahmesegment in zueinander linearer Ausrichtung angeordnet sind und in Umfangsrichtung jedes zweite der Aufnahmesegmente starr am Transportrotor angeschlossen ist, ferner mit einer Beladestation zur Übergabe der Gegenstände an die Aufnahmeelemente sowie einer Entladestation zur Übernahme der Gegenstände aus den Aufnahmeelementen.

Eine derartige Vorrichtung ist aus der DE-U- 8815 126 bekannt.

Bei derartigen bekannten Vorrichtungen werden die einem oder mehreren Bearbeitungsprozessen zu unterwerfenden Gegenstände zunächst in geordneter oder ungeordneter Form antransportiert, in einer Beladestation von den Gegenständen in ihrer Form angepaßten Greifelementen aufgenommen und in die Aufnahmeelemente überstellt. Über den Transportrotor werden die Gegenstände dann in der Regel taktweise weitertransportiert, dabei jeweils in den Phasen des Stillstandes den Bearbeitungsprozessen unterworfen und anschließend nach Erreichen der Entladestation von entsprechenden Greifvorrichtungen übernommen und erneut in geordneter oder ungeordneter Form an gegebenenfalls weitere Bearbeitungsvorrichtungen übergeben.

Im Fall von Spritzenzylindern für medizinische Spritzen erfolgt während der Bearbeitungsschritte beispielsweise eine Reinigung durch Luft oder Wasser, ein Silikonisieren der Oberfläche und dergl. mehr.

Um ausreichend kurze Taktzeiten zu erreichen, werden in der Regel in der Belade- bzw. Entladestation mehrere Gegenstände gleichzeitig übergeben bzw. übernommen. Da die Bearbeitungsschritte während des Stillstandes des Transportrotors jedoch häufig kürzer sind als die für die die Übergabe bzw. Übernahme der Gegenstände zur Verfügung stehende Zeit, bestimmt dieser Übergabe- bzw. Übernahmevorgang häufig die kürzest erreichbare Taktzeit.

Der Erfindung liegt die Aufgabe zugrunde, eine Vorrichtung der eingangs genannten Art zu schaffen, durch die es möglich ist, kleinere Taktzeiten zu erreichen, als für die Übergabe bzw. Übernahme der Gegenstände erforderlich ist.

Diese Aufgabe wird nach der Erfindung bei einer gattungsgemäßen Vorrichtung dadurch gelöst, daß die jeweils zwischen starren Aufnahmesegmenten angeordneten Aufnahmesegmente an ihrem einen Ende um eine zur Achse des Transportrotors parallele Achse zwischen einer Übergabe- und einer Bearbeitungsstellung verschwenkbar angeschlossen sind, wobei die Ausrichtung der Aufnahmeelemente der schwenkbaren Aufnahmesegmente in der radial einwärts geschwenkten Bearbeitungsstellung der Ausrichtung der Aufnahmeelemente in den starren Aufnahmesegmenten entspricht, während in der Übergabestellung die Aufnahmeelemente des schwenkbaren sowie des an die Schwenkachse angrenzenden starren Aufnahmesegments in einer gemeinsamen vertikalen Ebene liegen.

Der durch die Erfindung erreichte Vorteil besteht im wesentlichen darin, daß in der Belade- bzw. Entladestation an jeweils zwei Aufnahmesegmenten eine Übernahme bzw. Übergabe der Gegenstände erfolgen kann, während die taktweisen Bearbeitungsschritte sich jeweils nur auf ein Aufnahmesegment beziehen. Auf diese Weise steht für die Übergabe bzw. Übernahme der Gegenstände eine gegenüber der Taktzeit größere Zeit zur Verfügung. Um die Übergabe bzw. Übernahme der Gegenstände in üblicher linearer Ausrichtung vornehmen zu können, wird das schwenkbare Aufnahmesegment in eine zu dem benachbarten starren Aufnahmesegment fluchtende Ausrichtung gebracht. In den einzelnen Bearbeitungsstationen dagegen sind die schwenkbaren Aufnahmesegmente am Transportrotor entsprechend gleich den starren Aufnahmesegmenten ausgerichtet.

In bevorzugter Ausführungsform der Erfindung sind die Aufnahmeelemente des starren sowie des zugehörigen schwenkbaren, in die Übergabestellung verschwenkten Aufnahmesegments äquidistant zueinander angeordnet.

Die schwenkbaren Aufnahmesegmente sind zweckmäßigerweise an ihrer der Schwenkachse abgewandten Seite mit einer Kurvenrolle versehen, die an einer Kulissenbahn abläuft, wobei die Kulissenbahn im Bereich der Be- und Entladestation einen radial nach außen sich erstreckenden Verlauf aufweist. Dabei ist die Kulissenbahn vorteilhafterweise von der Umfangsfläche einer Kulissenscheibe gebildet, der die Kurvenrolle unter der Kraft einer Spannfeder anliegt.

Weiter ist im Rahmen der Erfindung vorgesehen, daß die schwenkbaren Aufnahmesegmente U-profilförmig mit zur Achse des Transportrotors weisenden Profilschenkeln ausgebildet sind. Dann kann zweckmäßigerweise an einem der Profilschenkel ein Anschlußdorn für die mit ihrem anderen Ende an einem Stehbolzen des Transportrotors angeschlossene Spannfeder vorgesehen sein.

Schließlich ist im Rahmen der Erfindung noch vorgesehen, daß außenseitig an dem starren Aufnahmesegment sowie an der Außenseite des Profilrückens des schwenkbaren Aufnahmesegments mehrere, die Aufnahmeelemente bildende Klippleisten lösbar angeschlossen sind, die mit zwischen sich die Gegenstände klemmenden Federzungen versehen sind. Auf diese Weise kann durch einfachen Austausch der Klippleisten eine Anpassung an unterschiedliche Formen der Gegenstände, insbes. an unterschiedliche Durchmesser erfolgen. Dabei tragen die schwenkbaren und die starren Aufnahmesegmente vorteilhafterweise jeweils eine gleiche Anzahl von Aufnahmeelementen.

Im folgenden wird die Erfindung an einem in der Zeichnung dargestellten Ausführungsbeispiel näher erläutert; es zeigen:
- Fig. 1: eine Draufsicht auf den Transportrotor nach der Erfindung,
- Fig. 2: eine Detaildarstellung eines Teils des Rotors nach Fig. 1,
- Fig. 3: einen Schnitt durch den Gegenstand nach Fig. 2 längs der Linie III - III.

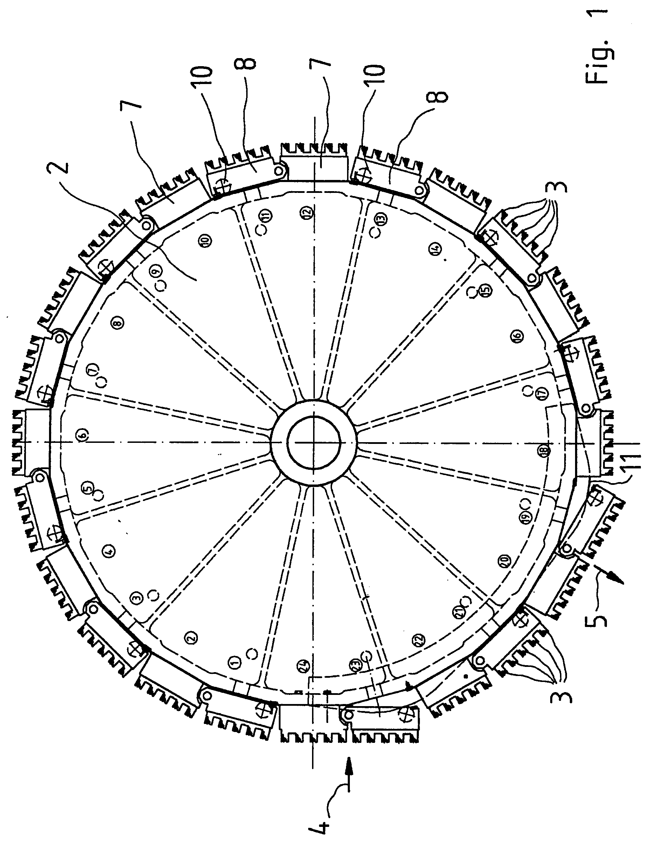

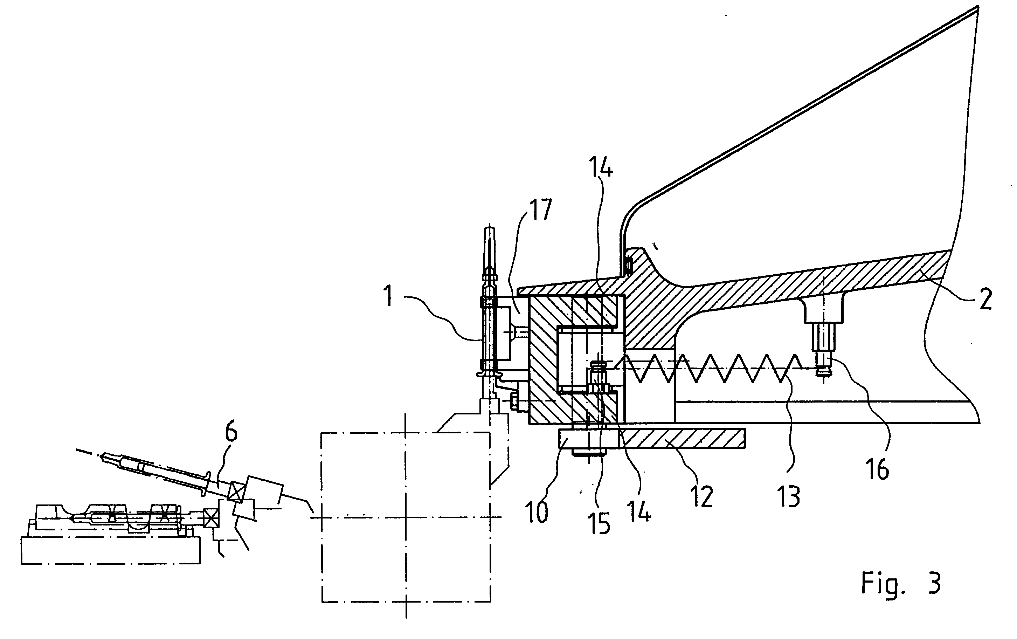

Die in der Zeichnung dargestellte Vorrichtung dient zur taktweisen Bearbeitung von Gegenständen 1, insbes. von Spritzenzylindern für medizinische Spritzen, wie in Fig. 3 dargestellt. Die Vorrichtung besteht im einzelnen aus einem Transportrotor 2, der umfangsseitig mit die Gegenstände 1 haltenden, in radialer Richtung nach außen hin offenen Aufnahmeelementen 3 versehen ist. Ferner ist die Vorrichtung mit einer in Fig. 1 durch den Pfeil 4 angedeuteten Beladestation zur Übergabe der Gegenstände 1 an die Aufnahmeelemente 3 sowie mit einer durch den Pfeil 5 angedeuteten Entladestation zur Übernahme der Gegenstände 1 aus den Aufnahmeelementen 3 versehen. Die Belade- bzw. Entladestation 4, 5 ist in Fig. 3 schematisch wiedergegeben und weist mehrere schwenkbare, dabei jeweils in axialer Richtung verstellbare Übergabefinger 6 auf, die ins Innere des Spritzenzylinders greifen.

Um den Transportrotor herum sind in der Zeichnung nicht wiedergegebene Bearbeitungsstationen vorgesehen, durch die das Reinigen, Trocknen, Silikonisieren usw. der Spritzenzylinder erfolgt.

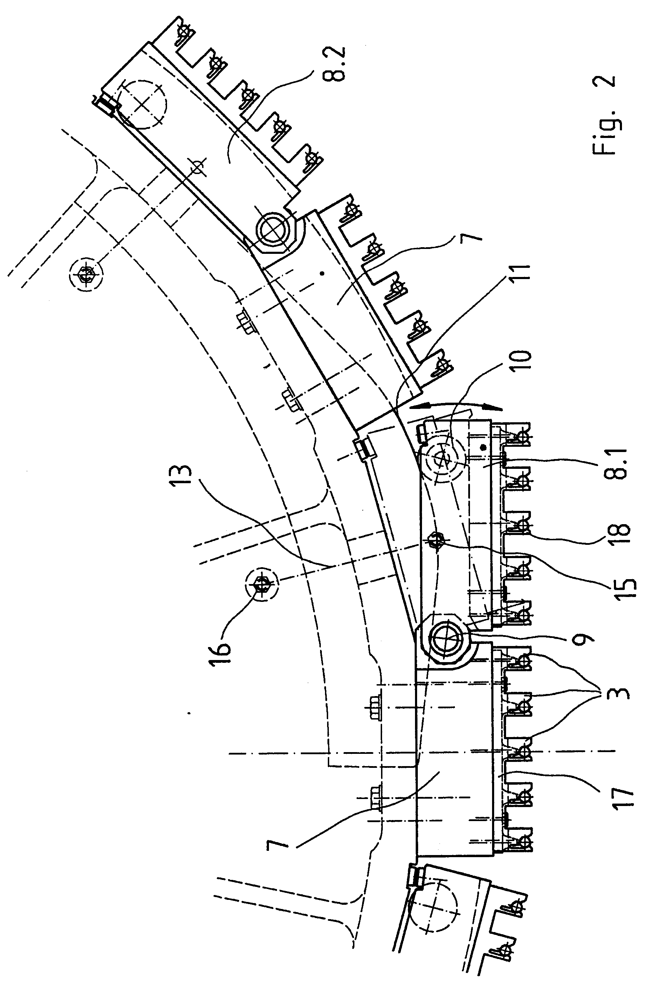

Im einzelnen sind jeweils mehrere der Aufnahmeelemente 3 gemeinsam an einem Aufnahmesegment 7, 8 in zueinander linearer Ausrichtung angeordnet. Dabei ist in Umfangsrichtung jeweils jedes zweite der Aufnahmesegmente 7, 8, nämlich die mit 7 bezeichneten, starr am Transportrotor 2 angeschlossen. Die jeweils dazwischen angeordneten Aufnahmesegmente 8 sind dagegen an ihrem einen Ende um eine zur Achse des Transportrotors parallele Achse 9 zwischen einer Übergabe- und einer Bearbeitungsstellung verschwenkbar angeschlossen. In Fig. 2 befindet sich das mit 8.1 bezeichnete Aufnahmesegment in der Übergabestellung, während das mit 8.2 bezeichnete Aufnahmesegment sich in der Bearbeitungsstellung befindet, also entsprechend gleich ausgerichtet ist wie die starren Aufnahmesegmente 7.

In der Übergabestellung des Aufnahmesegments 8 liegen dessen Aufnahmeelemente 3 mit denen des an die Schwenkachse 9 angrenzenden starren Aufnahmesegments 7 in einer gemeinsamen vertikalen Ebene. Auf diese Weise ist es möglich, in der Beladestation 4 die Spritzenzylinder für zwei Aufnahmesegmente 7, 8 gleichzeitig zu übergeben, wodurch sich gegenüber der Taktzeit größere Übergabezeiten ergeben, die eine zuverlässige und sichere Übergabe der Spritzenzylinder ermöglichen. Gleiches gilt entsprechend für die Entladestation 5.

Die Aufnahmeelemente 3 des starren sowie des zugehörigen schwenkbaren, in die Übergabestellung verschwenkten Aufnahmesegments 7, 8, sind, wie aus Fig. 2 zu ersehen ist äquidistant zueinander angeordnet. Durch diese Ausrichtung ist eine Übergabe bzw. Übernahme der Spritzenzylinder mit üblichen Einrichtungen möglich.

Die schwenkbaren Aufnahmesegmente 8 sind an ihrer der Schwenkachse 9 abgewandten Seite mit einer Kurvenrolle 10 versehen. Diese Kurvenrolle 10 läuft an einer Kulissenbahn 11 ab, die konzentrisch zur Achse des Transportrotors 2 verläuft und im Bereich der Be- und Entladestation 4, 5 einen radial nach außen sich erstreckenden Verlauf aufweist. Auf diese Weise werden die schwenkbaren Aufnahmesegmente 8 im Bereich der Be- und Entladestation 4, 5 selbsttätig ausgeschwenkt. Die Kulissenbahn 11 ist im einzelnen von der Umfangsfläche einer Kulissenscheibe 12 gebildet, der die Kurvenrolle 10 unter der Kraft einer Spannfeder 13 anliegt.

Die schwenkbaren Aufnahmesegmente 8 sind mit zur Achse des Transportrotors 2 weisenden Profilschenkeln 14 U-profilförmig ausgebildet. Dabei ist an dem unteren der beiden Profilschenkel 14 ein Anschlußdorn 15 für die Spannfeder 13 vorgesehen, die mit ihrem anderen Ende an einem Stehbolzen 16 des Transportrotors 2 angeschlossen ist.

An den starren sowie den schwenkbaren Aufnahmesegmenten 7, 8 sind außenseitig mehrere, die Aufnahmeelemente 2 bildende Klippleisten 17 angeschlossen. Diese Klippleisten 17 sind mit zwischen sich die Gegenstände 1 klemmenden Federzungen 18 versehen. Durch einen Austausch dieser Klippleisten 17 besteht die Möglichkeit, den Transportrotor schnell und einfach auf Gegenstände anderer Form oder anderen Durchmessers umzurüsten.

Im übrigen tragen die schwenkbaren und die starren Aufnahmesegmente 7, 8 jeweils eine gleiche, auf die Größe der Bearbeitungsstationen angepaßte Anzahl von Aufnahmeelementen 3.

## Patentansprüche

1. Vorrichtung zur taktweisen Bearbeitung von Gegenständen (1), insbesondere von Spritzenzylindern für medizinische Spritzen, mit einem Transportrotor (2), der umfangsseitig mit die Gegenstände (1) haltenden, in radialer Richtung nach außen hin offenen Aufnahmeelementen (3) versehen ist, wobei jeweils mehrere der Aufnahmeelemente (3) gemeinsam an einem Aufnahmesegment (7, 8) in untereinander linearer Ausrichtung angeordnet sind und in Umfangsrichtung jedes zweite der Aufnahmesegmente (7, 8) starr am Transportrotor (2) angeschlossen ist, ferner mit einer Beladestation (4) zur Übergabe der Gegenstände (1) an die Aufnahmeelemente (3) sowie einer Entladestation (5) zur Übernahme der Gegenstände (1) aus den Aufnahmeelementen (3), dadurch gekennzeichnet, daß die jeweils zwischen starren Aufnahmesegmenten (7) angeordneten Aufnahmesegmente (8) an ihrem einen Ende (9) um eine zur Achse des Transportrotors parallele Achse (9) zwischen einer Übergabe- und einer Bearbeitungsstellung verschwenkbar angeschlossen sind, wobei die Ausrichtung der Aufnahmeelemente (3) der schwenkbaren Aufnahmesegmente (8) in der radial einwärts geschwenkten Bearbeitungstellung der Ausrichtung der Aufnahmeelemente (3) in den starren Aufnahmesegmenten (7) entspricht, während in der Übergabestellung die Aufnahmeelemente (3) des schwenkbaren sowie des an die Schwenkachse (9) angrenzenden starren Aufnahmesegments (7) in einer gemeinsamen vertikalen Ebene liegen.

2. Vorrichtung nach Anspruch 1, dadurch gekennzeichnet, daß die Aufnahmeelemente (3) eines starren sowie des zugehörigen schwenkbaren, in die Übergabestellung verschwenkten Aufnahmesegments (7, 8) äquidistant zueinander angeordnet sind.

3. Vorrichtung nach Anspruch 1 oder 2, dadurch gekennzeichnet, daß die schwenkbaren Aufnahmesegmente (8) an ihrer der Schwenkachse (9) abgewandten Seite mit einer Kurvenrolle (10) versehen sind, die an einer Kulissenbahn (11) abläuft, wobei die Kulissenbahn (11) im Bereich der Be- und Entladestation (4, 5) einen radial nach außen sich erstreckenden Verlauf aufweist.

4. Vorrichtung nach Anspruch 3, dadurch gekennzeichnet, daß die Kulissenbahn (11) von der Umfangsfläche einer Kulissenscheibe (12) gebildet ist, der die Kurvenrolle (10) unter der Kraft einer Spannfeder (13) anliegt.

5. Vorrichtung nach einem der Ansprüche 1 bis 4, dadurch gekennzeichnet, daß die schwenkbaren Aufnahmesegmente (8) U-profilförmig mit zur Achse des Tranportrotors (2) weisenden Profilschenkeln (14) ausgebildet sind.

6. Vorrichtung nach Anspruch 5, dadurch gekennzeichnet, daß an einem der Profilschenkel (14) ein Anschlußdorn (15) für die mit ihrem anderen Ende an einem Stehbolzen (16) des Transportrotors (2) angeschlossene Spannfeder (13) vorgesehen ist.

7. Vorrichtung nach Anspruch 5 oder 6, dadurch gekennzeichnet, daß außenseitig an dem starren Aufnahmesegment (7) sowie an der Außenseite des Profilrückens des schwenkbaren Aufnahmesegments (8) mehrere, die Aufnahmeelemente (3) bildende Clipleisten (17) lösbar angeschlossen sind, die mit zwischen sich die Gegenstände klemmenden Federzungen (18) versehen sind.

8. Vorrichtung nach einem der Ansprüche 1 bis 7, dadurch gekennzeichnet, daß die schwenkbaren und die starren Aufnahmesegmente (7, 8) jeweils eine gleiche Anzahl von Aufnahmeelementen (3) tragen.

## Claims

1. Apparatus for the cyclic processing of articles (1), in particular syringe cylinders for medical syringes, comprising a transport rotor (2) which at its periphery is provided with receiving elements (3) which hold the articles (1) and which are open in a radial direction outwardly, wherein a respective plurality of the receiving elements (3) are arranged jointly on a receiving segment (7, 8) in mutually subjacently linear orientation and in the peripheral direction each second one of the receiving segments (7, 8) is rigidly connected to the transport rotor (2), and further comprising a loading station (4) for delivery of the articles (1) to the receiving elements (3) and an unloading station (5) for taking over the articles (1) from the receiving elements (3), characterised in that the receiving segments (8) respectively arranged between rigid receiving segments (7) are connected at their one end (9) pivotably about an axis (9) parallel to the axis of the transport rotor between a delivery and a processing position, wherein the orientation of the receiving elements (3) of the pivotable receiving segments (8) in the radially inwardly pivoted processing position corresponds to the orientation of the receiving elements (3) in the rigid receiving segments (7) while in the delivery position the receiving elements (3) of the pivotable receiving segment and the rigid receiving segment (7) adjoining the pivot axis (9) are in a common vertical plane.

2. Apparatus according to claim 1 characterised in that the receiving elements (3) of a rigid receiving segment (7) and the associated pivotable receiving segment (8) which is pivoted into the delivery position are arranged equidistantly relative to each other.

3. Apparatus according to claim 1 or claim 2 characterised in that at their side remote from the pivot axis (9) the pivotable receiving segments (8) are provided with a cam roller (10) which runs against a cam track (11), wherein in the region of the loading and unloading stations (4, 5) the cam track (11) is of a radially inwardly extending configuration.

4. Apparatus according to claim 3 characterised in that the cam track (11) is formed by the peripheral surface of a cam disc (12) against which the cam roller (10) lies under the force of a stressing spring (13).

5. Apparatus according to one of claims 1 to 4 characterised in that the pivotable receiving segments (8) are of a U-shaped configuration with profile limbs (14) which face towards the axis of the transport rotor (2).

6. Apparatus according to claim 5 characterised in that provided on one of the profile limbs (14) is a connecting bar (15) for the stressing spring (13) which is connected with its other end to a stud (16) on the transport rotor (2).

7. Apparatus according to claim 5 or claim 6 characterised in that a plurality of clip bar members (17) which form the receiving elements (3) are releasably connected on the outside to the rigid receiving segment (7) and to the outside of the back of the profile of the pivotable receiving segment (8), which bar members (17) are provided with spring tongues (18) for clamping the articles between them.

8. Apparatus according to one of claims 1 to 7 characterised in that the pivotable and the rigid receiving segments (7, 8) each carry an equal number of receiving elements (3).

## Revendications

1. Dispositif pour le traitement cadencé d'objets (1), notamment de cylindres pour seringues médicales, comportant un rotor de transport (2), qui est équipé, sur sa périphérie, d'éléments de réception (3), qui retiennent les objets (1) et sont ouverts dans une direction radiale vers l'extérieur, et dans lequel respectivement plusieurs des éléments de réception (3) sont disposés en commun sur un segment de réception (7,8) en étant alignés linéairement entre eux et un segment de réception (7,8) sur deux est raccordé rigidement au rotor de transport (2), dans la direction circonférentielle, et comportant un poste de chargement (4) pour le chargement des objets (1) aux éléments de réception (3), ainsi qu'un poste de déchargement (5) pour la délivrance des objets (1) à partir des éléments de réception (3), caractérisé en ce que les segments de réception (8) disposés respectivement entre des segments de réception fixes (7), sont raccordés, par une de leurs extrémités, de manière à pouvoir pivoter autour d'un axe (9) parallèle à l'axe du rotor de transport, entre une position de chargement et une position de traitement, et dans lequel l'alignement des éléments de réception (3) des segments de réception pivotants (8) dans la position de traitement pivotée radialement vers l'intérieur, correspond à l'alignement des éléments de réception (3) dans les segments de réception fixes (7), tandis que dans la position de délivrance, les éléments de réception (3) du segment de réception pivotant (8) ainsi que du segment de réception fixe (7) qui est adjacent à l'axe de pivotement (9), sont situés dans un plan vertical commun.

2. Dispositif selon la revendication 1, caractérisé en ce que les éléments de réception (3) d'un segment de réception fixe (7) ainsi que du segment de réception pivotant associé (8), pivoté dans la position de délivrance, sont équidistants.

3. Dispositif selon la revendication 1 ou 2, caractérisé en ce que les segments de réception pivotants (8) comportent, sur leur côté tourné à l'opposé de l'axe de pivotement (9), un galet de came (10), qui roule contre une coulisse (11), la coulisse (11) possédant, au niveau du poste de chargement et du poste de déchargement (4,5) une forme qui s'étend radialement vers l'extérieur.

4. Dispositif selon la revendication 3, caractérisé en ce que la coulisse (11) est formée par la surface périphérique d'un disque de coulisse (12), contre lequel le galet de came (10) s'applique sous la force d'un ressort de serrage (13).

5. Dispositif selon l'une des revendications 1 à 4, caractérisé en ce que les segments de réception pivotants (8) sont réalisés sous la forme d'un profilé en U comportant des branches (14) qui sont dirigées vers l'axe du rotor de transport (2).

6. Dispositif selon la revendication 5, caractérisé en ce qu'une broche de raccordement (15) pour le ressort de tension (13), qui est raccordé par son autre extrémité à un goujon fileté (16) du rotor de transport (2), est prévue sur l'une des branches (14) du profilé.

7. Dispositif selon la revendication 5 ou 6, caractérisé en ce que plusieurs barrettes formant pinces (17), qui forment les éléments de réception (3) et comportent des languettes élastiques (18) serrant entre elles les objets, sont raccordées de façon amovible, sur le côté extérieur, au segment de réception fixe (7) ainsi qu'à la face extérieure du dos du profilé du segment de réception pivotant (8).

8. Dispositif selon l'une des revendications 1 à 7, caractérisé en ce que les segments de réception pivotants (8) et les segments de réception fixes (7) portent respectivement un même nombre d'éléments de réception (3).
